Europäisches Patentamt

European Patent Office

Office européen des brevets

(19)

(11) Veröffentlichungsnummer : **0 185 162**
**B1**

(12) **EUROPÄISCHE PATENTSCHRIFT**

(45) Veröffentlichungstag der Patentschrift :
**13.04.88**

(21) Anmeldenummer : **85113034.4**

(22) Anmeldetag : **15.10.85**

(51) Int. Cl.⁴ : **B 23 B 31/04**

(54) **Bohrfutter, insbesondere zum Schlagbohren.**

(30) Priorität : **15.12.84 DE 8436751 U**

(43) Veröffentlichungstag der Anmeldung :
**25.06.86 Patentblatt 86/26**

(45) Bekanntmachung des Hinweises auf die Patenterteilung : **13.04.88 Patentblatt 88/15**

(84) Benannte Vertragsstaaten :
**CH DE FR GB IT LI**

(56) Entgegenhaltungen :
**DE-U- 7 227 714**
**FR-A-   959 540**
**FR-A- 1 183 328**
**GB-A-   165 249**
**US-A- 4 266 789**

(73) Patentinhaber : **Röhm, Günter Horst**
**Heinrich-Röhm-Strasse 50**
**D-7927 Sontheim (DE)**

(72) Erfinder : **Röhm, Günter Horst**
**Heinrich-Röhm-Strasse 50**
**D-7927 Sontheim (DE)**

(74) Vertreter : **Fay, Hermann, Dipl.-Phys. Dr.**
**Ensingerstrasse 21 Postfach 1767**
**D-7900 Ulm (Donau) (DE)**

Jouve, 18, rue St-Denis, 75001 Paris, France

EP 0 185 162 B1

**Beschreibung**

Die Erfindung betrifft ein Bohrfutter, insbesondere zum Schlagbohren, mit einem an eine Bohrspindel anschließbaren Futterkörper und mit die Futterbacken bildenden Futterbackenbolzen, die im Futterkörper in zur Futterachse geneigten Führungsbohrungen laufen und mittels eines mit den Futterbackenbolzen im Gewindeeingriff stehenden Stellrings verstellbar sind.

Bei derartigen beispielsweise aus DE-U 72 27 714 bekannten Bohrfuttern bildet der beim Bohrvorgang entstehende Bohrschmutz, wie Bohrstaub, Bohrmehl und gröberes Bohrklein, eine nicht zu vernachlässigende Verschmutzungsgefahr für das Bohrfutter, insbesondere bei aufwärts gerichtetem Bohren, wenn also der Bohrschmutz aus dem Bohrloch direkt nach unten in die für den Bohrer vorgesehene Werkzeugaufnahme des Bohrfutters fallen kann, von wo aus er tiefer in das Bohrfutter eindringen und mit der Zeit die Funktion des Bohrfutters so beeinträchtigen kann, daß das Bohrfutter zerlegt und gereinigt werden muß, was sehr aufwendige, in aller Regel nicht von einem Laien ausführbare Arbeiten erfordert.

Der Erfindung liegt die Aufgabe zugrunde, ein Bohrfutter der eingangs genannten Art so auszubilden, daß in das Bohrfutter gelangender Bohrschmutz sich nicht in der Führung der Spannbacken festsetzen und auch auf die Dauer die Funktion des Bohrfutters nicht beeinträchtigen kann.

Diese Aufgabe wird nach der Erfindung dadurch gelöst, daß im Futterkörper Reinigungskanäle vorgesehen sind, die einerseits in den Führungsbohrungen münden und andererseits offen nach außen ins Freie auslaufen. Zweckmäßig verlaufen die Reinigungskanäle im Futterkörper radial. Eine besonders bevorzugte Ausführungsform der Erfindung ist dadurch gekennzeichnet, daß die Reinigungskanäle in den Führungsbohrungen bohrerseitig vor dem Stellring im Bereich der den Gewindeeingriff am Stellring vermittelnden Zahnleisten der Futterbackenbolzen münden.

Der durch die Erfindung erreichte Vorteil besteht im wesentlichen darin, daß beim Bohrvorgang in das Bohrfutter und insbesondere in die Führungsbohrungen für die Futterbackenbolzen gelangender Bohrschmutz unter der Wirkung der Fliehkraft durch die Reinigungskanäle aus dem Futter hinaus nach außen ins Freie gefördert wird, so daß er sich nicht in den Führungsbohrungen sammeln und zwischen den Führungsflächen der Führungsbohrungen einerseits und der Futterbackenbolzen andererseits festsetzen kann. Vielmehr gelangt solcher Bohrschmutz aus dem Bereich zwischen diesen Führungsflächen in den Freiraum zwischen den Zahnleisten einerseits und der Wandung der Führungsbohrungen andererseits und vermag von dort frei durch die Reinigungskanäle nach außen austreten. Im Ergebnis wird ein Festsetzen der Futterbackenbolzen in den Führungsbohrungen und auch des Gewindes zwischen den Futterbackenbolzen und dem Stellring sehr wirksam verhindert.

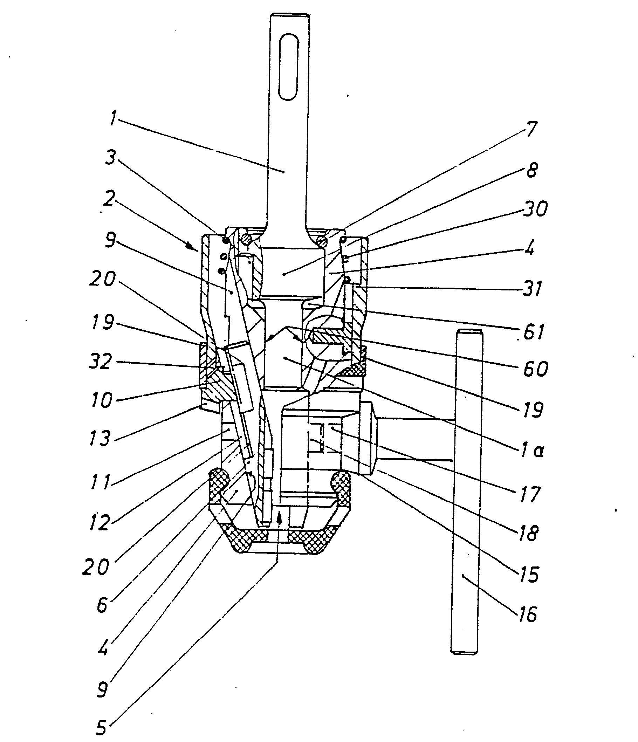

Im folgenden wird die Erfindung an einem in der Zeichnung dargestellten Ausführungsbeispiel näher erläutert ; die einzige Figur zeigt ein Bohrfutter nach der Erfindung im Axialschnitt, teils in Seitenansicht.

In der Zeichnung ist die Bohrspindel mit 1, das von der Bohrspindel angetriebene Bohrfutter allgemein mit 2 bezeichnet. Das Bohrfutter 2 ist mit einer Aufnahme 61 drehschlüssig auf der Bohrspindel 1 angeordnet, wozu Zapfen 3 dienen, die eine begrenzte axiale Verschiebbarkeit des Bohrfutters 2 auf der Bohrspindel 1 ermöglichen. Im Futterkörper 4 des Bohrfutters befindet sich eine Werkzeugaufnahme 5 für den nicht dargestellten Bohrer und ein in der Werkzeugaufnahme 5 mündender axialer Durchgang 60, durch den hindurch die Schlagbewegung von der Bohrspindel 1 über deren als Döpper arbeitendes Ende 1a auf den in der Werkzeugaufnahme 5 zwischen Futterbackenbolzen 6 gehaltenen Bohrerschaft übertragen wird. Der Futterkörper 4 ist über einen elastischen Ring 7 gegen einen Bund 8 der Bohrspindel 1 abgestützt, so daß das Bohrfutter 2 von der Schlagbewegung der Bohrspindel 1 praktisch entkoppelt ist. Die Futterbackenbolzen 6 laufen in gegen die Futterachse geneigten Führungsbohrungen 9 des Futterkörpers 4 und sind mittels eines mit den Futterbackenbolzen 6 im Gewindeeingriff stehenden Stellrings 10 verstellbar, der in einer nach außen offenen und die Führungsbohrungen 9, anschneidenden Ringnut des Futterkörpers 4 drehbar angeordnet ist. Der Stellring 10 besitzt einen mit einem Zahnkranz 13 versehenen Kragen. In den Zahnkranz 13 greift das Zahnritzel 15 eines Spannschlüssels 16, der zum Spannen und Lösen des Bohrfutters 2 mit einem Führungszapfen 17 in einer Führungsbohrung 18 des Futterkörpers 4 ansetzbar ist. Der Stellring 10 besteht aus zwei Hälften, die durch eine Stellhülse 19 zusammen gehalten sind.

Zwischen dem Futterkörper 4 und dem Stellring 10 ist eine Feststelleinrichtung vorgesehen, die ein selbsttätiges Lösen des Bohrfutters verhindert. Sie besteht im Ausführungsbeispiel aus einer verschiebbar unter der Kraft einer Feder 30 am Futterkörper 4 undrehbar geführten Sperrhülse 31, die über eine Verzahnung 32 den Stellring 10 verriegelt. Um die Verriegelung aufzuheben, ist die Sperrhülse 31 gegen die Kraft der Feder 30 axial zurückzuschieben, so daß die Verzahnung 32 außer Eingriff gelangt. Diese Feststelleinrichtung ist nicht Gegenstand der Erfindung und bedarf daher hier keiner weiteren Beschreibung.

Im Futterkörper 4 sind Reinigungskanäle 11 vorgesehen, die einerseits in den Führungsbohrungen 9 münden und andererseits offen nach außen ins Freie auslaufen. Jeder Führungsbohrung 9 ist einer dieser Reinigungskanäle 11 zugeordnet, die im Futterkörper 4 radial verlaufen. Im einzelnen münden die Reinigungskanäle 11 in den Führungsbohrungen 9 bohrerseitig vor dem Stellring 10 in einem zwischen den Futterbackenbolzen 6 und der Wandung der Führungsbohrungen 9 gebildeten Freiraum 12, der sich längs der den Gewindeeingriff am Stellring 10 vermittelnden Zahnleisten 20 der Futterbackenbolzen 6 erstreckt.

Fällt beispielsweise beim Überkopfbohren Bohrschmutz aus dem Bohrloch in die Werkzeugaufnahme 5 und gelangt dieser Bohrschmutz von dort zwischen die Führungsflächen der Futterbackenbolzen 6 einerseits und der Führungsbohrungen 9 andererseits, so kann dieser Bohrschmutz bei der Bewegung der Futterbackenbolzen in den Freiraum 12 und von hier unmittelbar durch die Reinigungsbohrungen 11 ins Freie gelangen, ohne daß er die Futterbackenbolzen 6 blockieren oder sich im Gewinde zwischen dem Stellring 10 und den Zahnleisten 20 der Futterbackenbolzen 6 festsetzen kann.

## Patentansprüche

1. Bohrfutter, insbesondere zum Schlagbohren, mit einem an eine Bohrspindel (1) anschließbaren Futterkörper (4) und mit die Futterbacken bildenden Futterbackenbolzen (6), die im Futterkörper (4) in zur Futterachse geneigten Führungsbohrungen (9) laufen und mittels eines mit den Futterbackenbolzen (8) im Gewindeeingriff stehenden Stellrings (10) verstellbar sind, dadurch gekennzeichnet, daß im Futterkörper (4) Reinigungskanäle (11) vorgesehen sind, die einerseits in den Führungsbohrungen (9) münden und andererseits offen nach außen ins Freie auslaufen.

2. Bohrfutter nach Anspruch 1, dadurch gekennzeichnet, daß die Reinigungskanäle (11) im Futterkörper (4) radial verlaufen.

3. Bohrfutter nach Anspruch 1 oder 2, dadurch gekennzeichnet, daß die Reinigungskanäle (11) in den Führungsbohrungen (9) bohrerseitig vor dem Stellring (10) im Bereich der den Gewindeeingriff am Stellring (10) vermittelnden Zahnleisten (20) der Futterbackenbolzen (6) münden.

## Claims

1. A drilling chuck, in particular for hammer drilling, comprising a chuck body (4) which can be connected to a drilling spindle (1), and chuck jaw pins (6) which form the chuck jaws and which extend in the chuck body (4) in guide bores (9) which are inclined with respect to the axis of the chuck, and are adjustable by means of an adjusting ring (10) which is in screwthreaded engagement with the chuck jaw pins (6), characterised in that provided in the chuck body (4) are cleaning passages (11) which on the one hand open in the guide bores (9) and on the other hand issue openly outwardly into the free air.

2. A drilling chuck according to claim 1 characterised in that the cleaning passages (11) extend radially in the chuck body (4).

3. A drilling chuck according to claim 1 or claim 2 characterised in that the cleaning passages (11) open into the guide bores (9) at the drill end in front of the adjusting ring (10) in the region of the toothed bar portions (20) of the chuck jaw pins (6), which toothed bar portions provide for the screwthreaded engagement with the adjusting ring (10).

## Revendications

1. Mandrin de serrage, en particulier pour le perçage à percussion, comprenant un corps de mandrin (4) pouvant être raccordé à une broche de perçage (1), et des axes de mâchoires de serrage (6) qui constituent les mâchoires de serrage, lesdits axes de mâchoires de serrage (6) coulissant, à l'intérieur du corps de mandrin (4), dans des alésages de guidage (9) inclinés par rapport à l'axe du mandrin et pouvant être déplacés au moyen d'une bague de réglage (10) en engrènement avec les axes de mâchoires de serrage (6), caractérisé par le fait que dans le corps de mandrin (4) sont prévus des conduits de nettoyage (11) qui débouchent, d'une part, dans les alésages de guidage (9) et présentent, d'autre part, une ouverture libre vers l'extérieur.

2. Mandrin de serrage selon la revendication 1, caractérisé par le fait que les conduits de nettoyage (11) s'étendent radialement dans le corps de mandrin (4).

3. Mandrin de serrage selon l'une des revendications 1 ou 2, caractérisé par le fait que les conduits de nettoyage (11) débouchent dans les alésages de guidage (9) du côté foret, en avant de la bague de réglage (10), dans la région des crémaillères (20) des axes de mâchoires de serrage (6) qui assurent l'engrènement sur la bague de réglage (10).